# EUROPEAN PATENT APPLICATION

(11) **EP 4 640 538 A1**
(43) Date of publication of application: **29.10.2025**
(21) Application number: 25165690.6
(22) Date of filing: 24.03.2025
(51) Int. Cl.: B62J 1/04, B62J 1/12, B62J 9/14, B62K 19/46

(54) **SEAT STRUCTURE OF SADDLE-TYPE VEHICLE WITH OPENING ASSIST DAMPER**

(30) Priority: 23.04.2024 JP 2024069766
(71) Applicant: Suzuki Motor Corporation, Shizuoka 432-8611 (JP)
(72) Inventor: OKAJIMA, Hiroki, Hamamatsu-shi (JP); KATSURA, Hiroto, Hamamatsu-shi (JP)
(74) Representative: Haseltine Lake Kempner LLP

(57) **Abstract**

A seat structure for a saddle-type vehicle in which a seat (16, 80, 100) is connected to a vehicle body, the seat structure includes: an accommodation box (41, 83, 103) installed under the seat; a base bracket (51, 52, 86, 87, 106, 107) attached to an upper part of the vehicle body; a seat bracket (61, 88, 108) attached to a lower part of the seat; and a repulsive member (71, 91, 111) that applies a repulsive force to the seat in an opening direction. The seat bracket is pivotably connected to the base bracket, a tip end (72, 92, 112) of the repulsive member is pivotably connected to the seat bracket, and a base end (73, 93, 113) of the repulsive member is pivotably connected to the vehicle body rearward of the base bracket and in front of the accommodation box.

## Description

### TECHNICAL FIELD

The present invention relates to a seat structure for a saddle-type vehicle.

### BACKGROUND ART

A known seat structure for a saddle-type vehicle is one in which a damper assists a lifting operation of a seat (see, for example, Patent Literature 1). In the seat structure described in Patent Literature 1, a movable bracket provided at a front end of the seat and a fixed bracket provided on a vehicle body frame are connected via a hinge so as to be able to open and close. A damper is connected to middle of the seat in a front-rear direction, and when the seat is closed, a repulsive force of the damper acts on the seat in an opening direction. As a result, a driver can open the seat by simply applying a light upward pressure, and the damper's repulsive force keeps the seat in the open position.

### CITATION LIST

### PATENT LITERATURE

Patent Literature 1: JP2001-122172A

### SUMMARY OF INVENTION

### TECHNICAL PROBLEM

In the seat structure described in Patent Literature 1, the damper is located in the middle in the front-rear direction below the seat, so the damper makes it not possible to make effective use of a space under the seat. In saddle-type vehicles, an accommodation box is often installed under a seat, but a size of the accommodation box may be restricted by a damper.

The present invention is made in consideration of the above-described point, and has an object to provide a seat structure that can ensure sufficient accommodation box capacity without increasing a space under a seat.

### SOLUTION TO PROBLEM

One aspect of a seat structure of the present invention is a seat structure for a saddle-type vehicle in which a seat is connected to a vehicle body, the seat structure including an accommodation box installed under the seat, a base bracket attached to an upper part of the vehicle body, a seat bracket attached to a lower part of the seat, and a repulsive member that applies a repulsive force to the seat in an opening direction, where the seat bracket is pivotably connected to the base bracket, a tip end of the repulsive member is pivotably connected to the seat bracket, and a base end of the repulsive member is pivotably connected to the vehicle body rearward of the base bracket and in front of the accommodation box, thereby solving the above-mentioned problem.

### ADVANTAGEOUS EFFECTS OF INVENTION

According to the seat structure of the aspect of the present invention, when the seat is lifted and the seat bracket pivots relative to the base bracket, the seat is pushed up in the opening direction by the repulsive member via the seat bracket, thereby assisting a lifting operation of the seat. In addition, by installing the repulsive member in a space in front of the accommodation box below the seat, the accommodation box and the repulsive member can be accommodated compactly below the seat. Since the repulsive member is installed near the seat bracket, an overall length of the repulsive member is shortened to reduce its weight, and the repulsive member is less likely to be exposed even when the seat is opened, improving the appearance.

### BRIEF DESCRIPTION OF DRAWINGS

FIG. 1 is a left side view of a saddle-type vehicle according to an embodiment.
FIG. 2 is a left side view of a rear part of a vehicle body of the present embodiment.
FIG. 3 is a top view of a rear part of the vehicle body of the present embodiment.
FIG. 4 is a perspective view of a seat structure of the present embodiment.
FIG. 5 is a cross-sectional view illustrating a state where a seat of the seat structure of the present embodiment is in a closed state.
FIG. 6 is a cross-sectional view illustrating the seat of the seat structure of the present embodiment in middle of being opened.
FIG. 7 is a cross-sectional view illustrating a state where the seat of the seat structure of the present embodiment is in an open state.
FIG. 8 is a cross-sectional view illustrating a state where a seat of a seat structure of a first modification example is in a closed state.
FIG. 9 is a cross-sectional view illustrating a state where a seat of a seat structure of a second modification example is in a closed state.

In one aspect of a seat structure of the present invention, a seat is connected to a vehicle body of a saddle-type vehicle, and an accommodation box is installed under the seat. Further, a base bracket is attached to an upper part of the vehicle body, a seat bracket is attached to a lower part of the seat, and the seat bracket is pivotably connected to the base bracket. In addition, a reaction force is applied to the seat in an opening direction from a repulsive member, a tip end of the repulsive member is pivotably connected to the seat bracket, and a base end of the repulsive member is pivotably connected to the vehicle body rearward of the base bracket and in front of the accommodation box. When the seat is lifted and the seat bracket pivots relative to the base bracket, the seat is pushed up in the opening direction by the repulsive member via the seat bracket, thereby assisting a lifting operation of the seat. In addition, by installing the repulsive member in a space in front of the accommodation box below the seat, the accommodation box and the repulsive member can be accommodated compactly below the seat. Since the repulsive member is installed near the seat bracket, an overall length of the repulsive member is shortened to reduce its weight, and the repulsive member is less likely to be exposed even when the seat is opened, improving the appearance.

### [Embodiment]

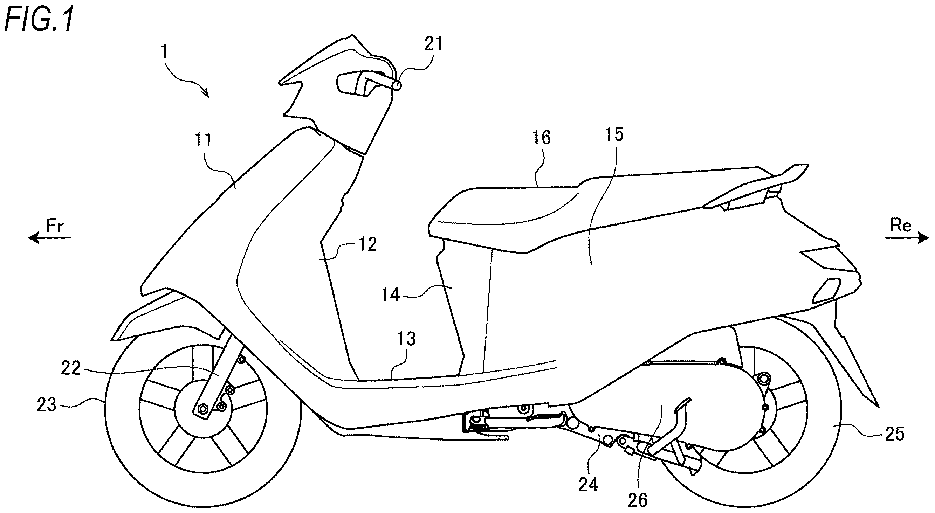

Hereinafter, a saddle-type vehicle according to the present embodiment will be described with reference to the accompanying drawings. FIG. 1 is a left side view of a saddle-type vehicle according to the present embodiment. In the following drawings, an arrow Fr indicates the front of the vehicle, an arrow Re indicates the rear of the vehicle, an arrow L indicates the left side of the vehicle, and an arrow R indicates the right side of the vehicle.

As illustrated in FIG. 1, a saddle-type vehicle 1 is configured by mounting various covers as an exterior body of the vehicle on an underbone type vehicle body frame. A front cover 11 is provided at the front of the vehicle, and a front leg shield 12 that protects rider's legs is provided at the rear of the front cover 11. A floor board 13 extends rearward from a lower end of the front leg shield 12, and a body cover 14 and a pair of side covers 15 are provided behind the floor board 13. A seat 16 having a series of seating surfaces for a driver and a passenger is provided on an upper part of the side cover 15.

A handlebar 21 is provided on an upper side of the front cover 11, and a front wheel 23 is rotatably supported on a lower side of the front cover 11 via a pair of front forks 22. A swing arm 24 equipped with a motor is provided below the side cover 15. The swing arm 24 is pivotably connected to a vehicle body frame, and a rear wheel 25 is rotatably supported at the rear of the swing arm 24. A left side of the swing arm 24 is covered by a swing arm cover 26, and power is transmitted from a motor (not illustrated) to the rear wheel 25 via a belt-type continuously variable transmission (not illustrated) inside the swing arm cover 26.

In this type of saddle-type vehicle, the seat is connected to the vehicle body so as to be openable and closable. In scooter-type saddle-type vehicles, the seat is generally designed to open more than upright so that the seat cannot close under its own weight, but there are also types of seats that open only a small amount and have repulsive members such as dampers and springs that prevent the seat from closing under its own weight. In this type of saddle-type vehicle, a repulsive force from a damper or the like acts on the seat even when the seat is closed. For this reason, even when the seat is held in a closed state by a locking mechanism, the repulsive force of the damper or the like acts on the locking mechanism, making an unlocking operation difficult.

Because a repulsive force acts on the seat in an opening direction, gaps are likely to occur where the seat and covers are joined, reducing watertightness. Furthermore, when a damper or the like is installed only on one side in a left-right direction, and only one side of the seat is supported by the damper or the like, there is a risk that the seat will tilt. In order to prevent gaps at the joints and to prevent the seat from tilting, it is necessary to increase rigidity of the seat itself, which makes the seat heavy. Therefore, in the seat structure of the present embodiment, when the seat is open, the seat is held in place by the repulsive force of a damper or the like, and when the seat is closed, the repulsive force of the damper or the like is not applied to the seat.

Furthermore, in saddle-type vehicles such as electric scooters, an accommodation box may be installed under the seat. In this case, depending on a position of the damper, the size of the accommodation box may be restricted, making it difficult to ensure sufficient capacity. This problem is not limited to electric scooters, but also occurs in engine vehicles. Incidentally, an accommodation box may be tilted rearward to make it easier to accommodate items, resulting in a dead space near a hinge at a front end of the seat in front of the accommodation box. Therefore, in the seat structure of the present embodiment, the dead space in front of the accommodation box is utilized to install the accommodation box and the damper compactly while ensuring the accommodation box capacity.

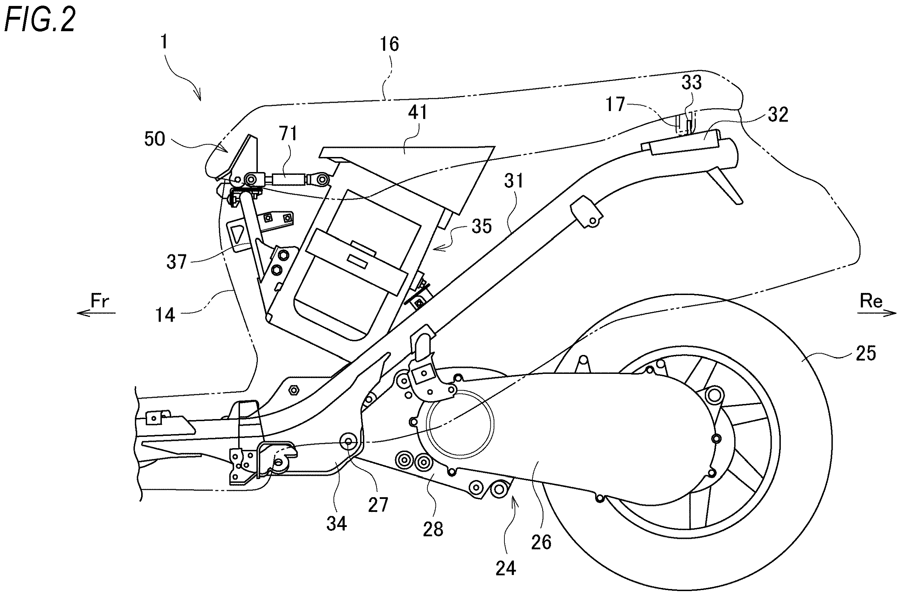

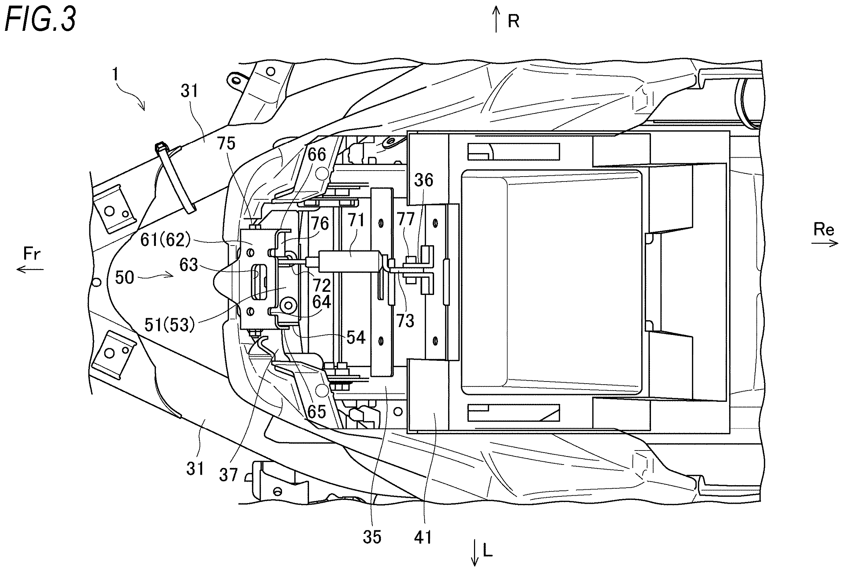

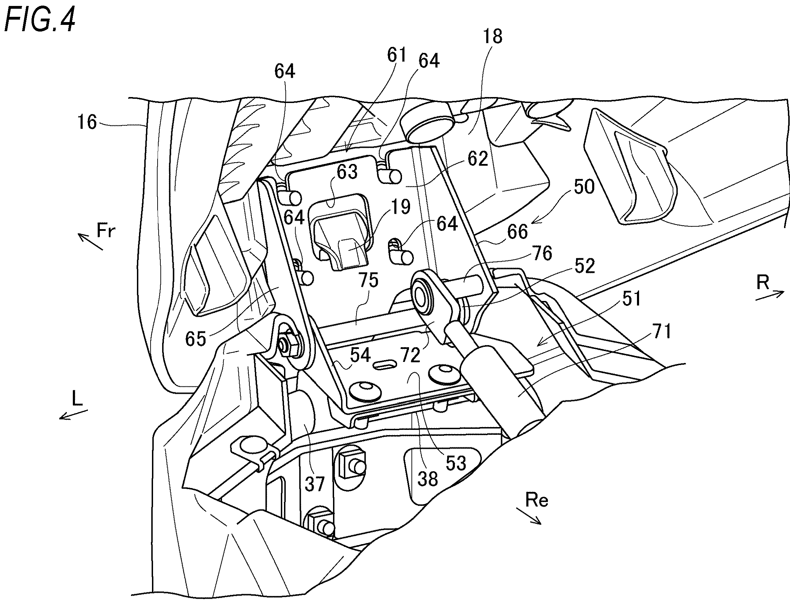

The seat structure of the saddle-type vehicle will be described below with reference to FIGS. 2 to 4. FIG. 2 is a left side view of a rear part of the vehicle body of the present embodiment. FIG. 3 is a top view of the seat structure of the present embodiment. FIG. 4 is a perspective view of the seat structure of the present embodiment. In addition, in FIGS. 2 to 4, some members are illustrated by two-dot chain lines or are not illustrated.

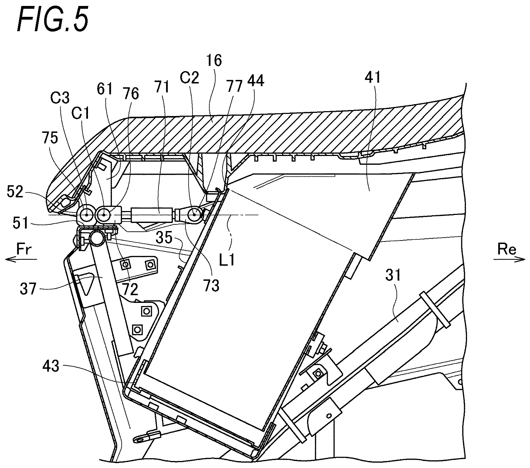

As illustrated in FIGS. 2 and 3, at the rear part of the vehicle body of the saddle-type vehicle 1, a pair of side frames 31 extend obliquely upward from the front to the rear. A box support frame 35 is fixed to the inside of the pair of side frames 31. The box support frame 35 is formed into a rectangular cage shape by combining vertical and horizontal frames. An accommodation box 41 is installed inside the box support frame 35, and various items such as helmets are accommodated inside the accommodation box 41. In a side view, the accommodation box 41 is inclined so that a front upper end 44 of the accommodation box 41 is located rearward of a front lower end 43 (see FIG. 5) of the accommodation box 41.

A seat support frame 37 is fixed to a lower front side of the box support frame 35, and extends upward from a lower part of the box support frame 35 along the body cover 14. A front end of the seat 16 is connected to an upper part of the seat support frame 37 via an opening/closing mechanism 50 equipped with a damper 71. At the rear of the box support frame 35, the pair of side frames 31 are connected via a bridge bracket 32. A seat lock 33 is provided on the bridge bracket 32, and a seat striker 17 is provided on a rear end of the seat 16. When the seat 16 is closed, the seat striker 17 is locked to the seat lock 33.

A fixed bracket 34 projects downward from near a rising portion on a front side of the pair of side frames 31, and the swing arm 24 is pivotably supported on the fixed bracket 34 via a pivot 27. A base end of the swing arm 24 forms a motor case 28, inside which a motor (not illustrated) is installed. The rear wheel 25 is supported at a rear end of the swing arm 24 and a rear suspension (not illustrated) is connected thereto. By positioning the motor closer to the pivot 27 of the swing arm 24, vibrations transmitted to the motor when the swing arm 24 swings are suppressed.

As illustrated in FIGS. 3 and 4, the opening/closing mechanism 50 of the seat structure has first and second base brackets 51 and 52, a seat bracket 61, and the damper (repulsive member) 71. The seat bracket 61 is connected to the first and second base brackets 51 and 52 via a seat rotation shaft 75, and the box support frame 35 is connected to the seat bracket 61 via the damper 71. As the seat 16 is opened or closed, the seat bracket 61 pivots relative to the first and second base brackets 51 and 52, and the damper 71 expands and contracts in response to the pivoting of the seat bracket 61, thereby applying a repulsive force to the seat 16 in the opening direction.

A support plate 38 having a flat shape is provided at an upper end of the seat support frame (vehicle body) 37, and the first base bracket 51 is fixed to an upper surface of the support plate 38 by screws. A lower plate 53 of the first base bracket 51 extends in a vehicle width direction, and a side plate 54 stands up from one side edge (left side edge) of the lower plate 53 of the first base bracket 51. The second base bracket 52 is attached to the other side edge (right side edge) of the lower plate 53 of the first base bracket 51. The second base bracket 52 stands up from the lower plate 53 of the first base bracket 51 and faces the side plate 54 of the first base bracket 51 with a gap therebetween.

The seat bracket 61 is attached to a seat plate 18 below the seat 16. A hook 19 protrudes downward from a front side of a lower surface of the seat plate 18, and an opening 63 in a center of an upper plate 62 of the seat bracket 61 is hooked onto the hook 19. Four oblong holes 64 are formed around the opening 63 of the upper plate 62, and the seat bracket 61 is fixed to the seat plate 18 by screws through these oblong holes 64. A pair of side plates 65 and 66 are connected to both side edges of the upper plate 62 of the seat bracket 61, and the pair of side plates 65 and 66 overlap the side plate 54 of the first base bracket 51 and the second base bracket 52 from the outer side in the vehicle width direction.

An overlapping portion of the side plate 54 of the first base bracket 51 and the side plate 65 of the seat bracket 61 and an overlapping portion of the second base bracket 52 and the side plate 66 of the seat bracket 61 are connected via the seat rotation shaft 75. The side plate 66 of the seat bracket 61 protrudes rearward beyond the side plate 65, and a connecting pin 76 protrudes from a protruding portion of the side plate 66 toward the inside in the vehicle width direction. The connecting pin 76 is provided at a position eccentric to the seat rotation shaft 75, and the connecting pin 76 swings between a rear position and an upper position of the seat rotation shaft 75 as the seat 16 is opened or closed. A tip end 72 of the damper 71 is pivotably connected to the seat bracket 61 via the connecting pin 76.

A base end 73 of the damper 71 is connected to the vehicle body rearward of the first base bracket 51 and forward of the accommodation box 41. More specifically, a support bracket 36 is provided on an upper front side of the box support frame 35, and a base end 73 of the damper 71 is pivotably connected to a support bracket 36 via a connecting pin 77. The seat bracket 61 is connected to the box support frame 35 via the damper 71, and as the seat bracket 61 pivots, the damper 71 expands and contracts while pivoting about the base end 73 as a fulcrum. In this manner, the damper 71 is installed under the seat 16 and in front of the accommodation box 41 by utilizing a dead space.

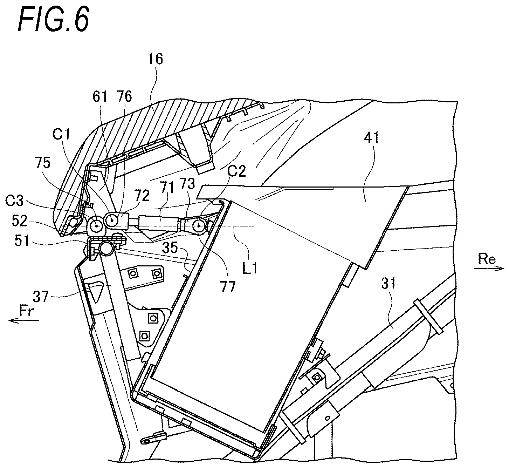

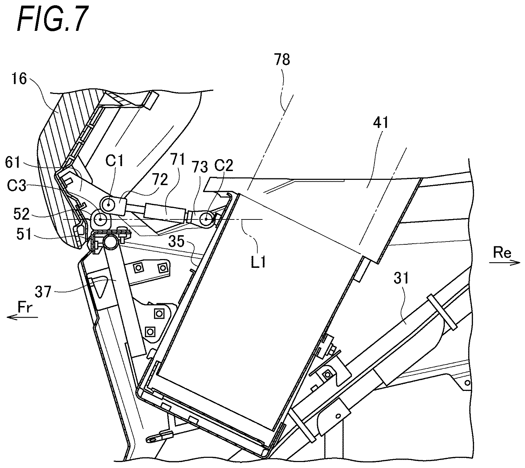

The layout of the damper and an opening and closing operation of the seat will be described below with reference to FIGS. 5 to 7. FIG. 5 is a cross-sectional view illustrating a state where the seat of the seat structure of the present embodiment is in a closed state. FIG. 6 is a cross-sectional view illustrating the seat of the seat structure of the present embodiment in the middle of being opened. FIG. 7 is a cross-sectional view illustrating a state where the seat of the seat structure of the present embodiment is in an open state.

As illustrated in FIG. 5, the box support frame 35 is disposed below the seat 16 in a rearwardly inclined state. As a result, the accommodation box 41 is also inclined rearward, and a space shaped like an inverted triangle in a side view is formed below the seat 16 and in front of the accommodation box 41. The seat support frame 37 extends along a front oblique side of this space, and the first and second base brackets 51 and 52 and the seat bracket 61 are connected to the upper part of the seat support frame 37 via the seat rotation shaft 75. In addition, the tip end 72 of the damper 71 is connected to the connecting pin 76 of the seat bracket 61, and the base end 73 of the damper 71 is connected to the connecting pin 77 on the upper part of the box support frame 35.

The base end 73 of the damper 71 is located rearward of the front lower end 43 of the accommodation box 41 and forward of the front upper end 44 of the accommodation box 41. In order to secure a space behind the accommodation box 41, the accommodation box 41 is moved forward, but the damper 71 can be installed by utilizing the narrow space in front of the accommodation box 41. In addition, the base end 73 of the damper 71 is located below the front upper end 44 of the accommodation box 41 and above the front lower end 43 of the accommodation box 41. The damper 71 does not protrude above or below the accommodation box 41, and a space for installing peripheral components above and below the accommodation box 41 is secured, while the thickness of the seat 16 is secured.

When the seat 16 is closed, the tip end 72 and base end 73 of the damper 71 are positioned at approximately the same height so that the damper 71 is in a horizontal position. More specifically, the height of a pivot center C1 (center of the connecting pin 76) of the tip end 72 of the damper 71 and the height of a pivot center C2 (center of the connecting pin 77) of the base end 73 of the damper 71 are approximately the same. The damper 71 extends horizontally behind the seat bracket 61 and is positioned high, thereby ensuring a space below the damper 71 to accommodate electronic devices, cables, and the like.

Furthermore, the pivot center C1 of the tip end 72 of the damper 71 is located on a straight line L1 connecting a pivot center C3 (the center of the seat rotation shaft 75) of the seat bracket 61 and the pivot center C2 of the base end 73 of the damper 71. When the seat 16 is closed, the seat bracket 61 and the damper 71 stop at a position where the pivot centers C1 to C3 are aligned in a line, and the repulsive force of the damper 71 does not act on the seat 16. Therefore, the seat lock 33 does not become difficult to unlock, and gaps are unlikely to form at the joining portions between the seat 16 and covers, and the like, and watertightness is not impaired.

As illustrated in FIG. 6, when the seat 16 is opened from a closed state, the seat bracket 61 starts to pivot in an opening direction with the seat rotation shaft 75 as a fulcrum relative to the first and second base brackets 51 and 52. As the seat bracket 61 pivots, the damper 71 pivots obliquely upward with the connecting pin 77 as a fulcrum. In this case, the pivot center C1, which is a point of action of the damper 71, pivots upward from the straight line L1, so that the repulsive force of the damper 71 starts to act on the seat 16 via the seat bracket 61. The repulsive force of the damper 71 pushes the seat 16 upward in the opening direction, thereby assisting a lifting operation of the seat 16.

In this case, the seat bracket 61 is installed at a center of the seat 16 in the vehicle width direction, and the damper 71 is located inside both ends of the seat bracket 61 in the vehicle width direction (see FIG. 3). Therefore, when the seat 16 is opened, the repulsive force of the damper 71 is applied equally to the left and right sides of the seat 16 via the seat bracket 61, thereby suppressing left and right tilt of the seat 16. In addition, the damper 71 pushes up the seat 16 without twisting the seat bracket 61. In this way, since the damper 71 is not installed offset in the vehicle width direction, the repulsive force of the damper 71 is smoothly transmitted to the seat 16.

As illustrated in FIG. 7, when the seat 16 is opened further, the seat 16 approaches an upright position. As the seat 16 is opened, the moment with which the seat 16 falls under its own weight decreases. The moment due to the repulsive force of the damper 71 becomes larger than the moment at which the seat 16 falls under its own weight, and the seat 16 is held in the open state by the repulsive force of the damper 71. When the seat 16 is in an open state, the accommodation box 41 opens upward, and the damper 71 is located forward of an opening of the accommodation box 41. Therefore, the damper 71 does not hinder the accommodation of items, improving the convenience of the accommodation box 41.

As described above, according to the seat structure of the present embodiment, when the seat 16 is lifted and the seat bracket 61 pivots relative to the first and second base brackets 51 and 52, the damper 71 pushes the seat 16 up in the opening direction via the seat bracket 61, assisting in the lifting operation of the seat 16. In addition, the damper 71 is installed in the space below the seat 16 and in front of the accommodation box 41, so that the accommodation box 41 and the damper 71 can be accommodated compactly below the seat 16. Since the damper 71 is installed near the seat bracket 61, the overall length of the damper 71 is shortened to reduce its weight, and the damper 71 is not easily exposed even when the seat 16 is opened, improving the appearance.

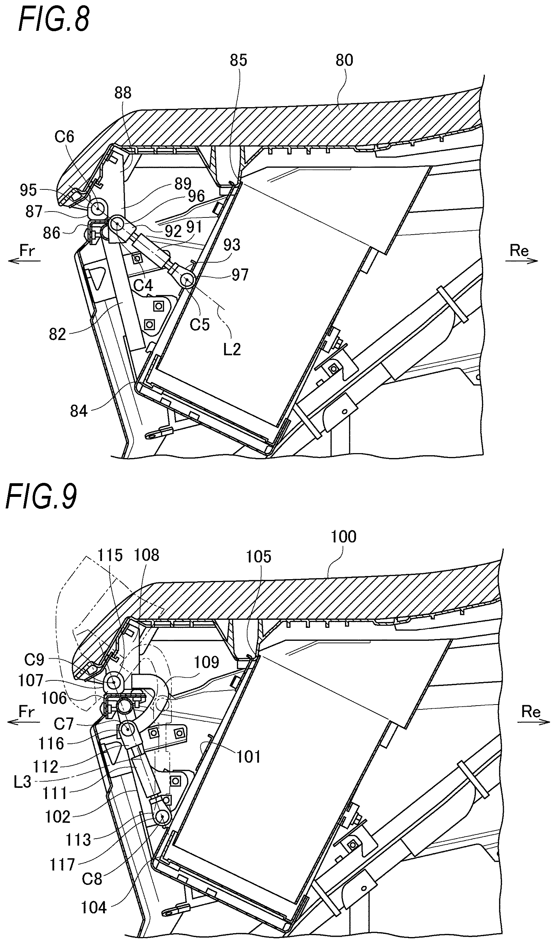

Next, a seat structure according to a first modification example will be described with reference to FIG. 8. The seat structure of the modification example 1 differs from the seat structure of the present embodiment in that the damper is inclined forward. Therefore, the description of the seat structure of the modification example 1 that is similar to the seat structure of the present embodiment will be omitted. FIG. 8 is a cross-sectional view illustrating a state where the seat of the seat structure of the first modification example is in a closed state.

As illustrated in FIG. 8, first and second base brackets 86 and 87 are fixed to an upper part of a seat support frame 82, and a seat bracket 88 is connected to the first and second base brackets 86 and 87 via a seat rotation shaft 95. When a seat 80 is closed, a part of the seat bracket 88 extends downward beyond the first base bracket 86, and a connecting pin 96 is provided on an extension portion 89 of the seat bracket 88. A tip end 92 of a damper 91 is connected to the connecting pin 96 of the seat bracket 88, and a base end 93 of the damper 91 is connected to a connecting pin 97 at a middle part in a height direction of a box support frame 81.

The base end 93 of the damper 91 is located rearward of a front lower end 84 of an accommodation box 83 and forward of a front upper end 85 of the accommodation box 83, and the base end 93 of the damper 91 is located below the front upper end 85 of the accommodation box 83 and above the front lower end 84 of the accommodation box 83. The damper 91 is installed in a narrow space in front of the accommodation box 83, and a space for installing peripheral components is secured above and below the accommodation box 83. In addition, the base end 93 of the damper 91 is positioned lower than the tip end 92 so that the damper 91 is in a forward-leaning position, and a space is provided above the damper 91 in the forward-leaning position to accommodate electronic devices and cables.

When the seat 80 is closed, a pivot center C4 of the tip end 92 of the damper 91 is located on a straight line L2 connecting a pivot center C6 of the seat bracket 88 and a pivot center C5 of the base end 93 of the damper 91. The pivot centers C4 to C6 are aligned diagonally downward, and a repulsive force of the damper 91 does not act on the seat 80 via the seat bracket 88. Therefore, the seat lock does not become difficult to unlock, and gaps are unlikely to form at joining portions between the seat 80 and covers, and the like, and watertightness is not impaired.

As described above, in the seat structure of the first modification example as well, the lifting operation of the seat 80 is assisted by the damper 91. In addition, the accommodation box 83 and the damper 91 are accommodated compactly below the seat 80.

Next, a seat structure according to a second modification example will be described with reference to FIG. 9. The seat structure of the modification example 2 differs from the seat structure of the present embodiment in that the damper stands upright. Therefore, the description of the seat structure of the modification example 2 that is similar to the seat structure of the present embodiment will be omitted. FIG. 9 is a cross-sectional view illustrating a state where the seat of the seat structure of the second modification example is in a closed state.

As illustrated in FIG. 9, first and second base brackets 106 and 107 are fixed to an upper part of a seat support frame 102, and a seat bracket 108 is connected to the first and second base brackets 106 and 107 via a seat rotation shaft 115. AU-shaped piece 109 is attached to the seat bracket 108, and when the seat 100 is in a closed state, a lower end of the U-shaped piece 109 fits directly below the first base bracket 106. Below the first base bracket 106 and forward of a rear end of the first base bracket 106, a tip end 112 of a damper 111 is connected to a connecting pin 116 at the lower end of the U-shaped piece 109, and a base end 113 of the damper 111 is connected to a connecting pin 117 at a lower end of a box support frame 101.

The base end 113 of the damper 111 is located rearward of a front lower end 104 of an accommodation box 103 and forward of a front upper end 105 of the accommodation box 103, and the base end 113 of the damper 111 is located below a front upper end 105 of the accommodation box 103 and above the front lower end 104 of the accommodation box 103. The damper 111 is installed in a narrow space in front of the accommodation box 103, and a space for installing peripheral components is secured above and below the accommodation box 103. In addition, the base end 113 of the damper 111 is positioned lower than a tip end 112 so that the damper 111 is in an upright position overlapping the seat support frame 102. A space for accommodating electronic devices and cables is provided behind the damper 111 in the upright position.

When the seat 100 is closed, a pivot center C7 of the tip end 112 of the damper 111 is located slightly below a straight line L3 connecting a pivot center C9 of the seat bracket 108 and a pivot center C8 of the base end 113 of the damper 111. In this case, the damper 111 is connected to the seat 100 via the U-shaped piece 109 and the seat bracket 108, but a repulsive force of the damper 111 does not act in the opening direction of the seat 100. Therefore, the seat lock does not become difficult to unlock, and gaps are unlikely to form at joining portions between the seat 100 and covers, and the like, and watertightness is not impaired.

As indicated by a two-dot chain line, when the seat 100 is opened from a closed state, the seat bracket 108 is pivoted in the opening direction with the seat rotation shaft 115 as a fulcrum relative to the first and second base brackets 106 and 107. As the seat bracket 108 pivots, the damper 111 pivots obliquely upward with the connecting pin 117 as a fulcrum. In this case, the pivot center C7, which is a point of action of the damper 111, swings upward from the straight line L3, so that the repulsive force of the damper 111 acts on the seat 100 via the seat bracket 108. The repulsive force of the damper 111 pushes the seat 100 upward in the opening direction, thereby assisting the lifting operation of the seat 100.

As described above, in the seat structure of the second modification example as well, the lifting operation of the seat 100 is assisted by the damper 111. In addition, the accommodation box 103 and the damper 111 are accommodated compactly below the seat 100.

In the present embodiment and each modification example, the base end of the damper is connected to the box support frame, but the base end of the damper may be connected to the vehicle body rearward of the base bracket and in front of the accommodation box. For example, the base end of the damper may be connected to a vehicle body cover such as a side cover or to the vehicle body frame.

In addition, in the present embodiment and each of the modification examples, the first and second base brackets are formed separately, but the first and second base brackets may be formed integrally.

Furthermore, in the present embodiment and each of the modification examples, the accommodation box is tilted, but the accommodation box does not have to be tilted.

Furthermore, in the present embodiment and each modification example, a damper is described as an example of the repulsive member, but the repulsive member may be a spring, for example, as long as it is capable of applying a repulsive force to the seat in the opening direction.

In addition, in the present embodiment and the modification example, the seat is not opened to upright, but the seat may be opened more than upright. When the seat is opened more than upright, it will not close under its own weight, but this prevents the seat from closing unexpectedly due to wind pressure or external forces.

In addition, in the present embodiment and the first modification example, a configuration is described in which the pivot center of the tip end of the damper is located on a straight line connecting the pivot center of the seat bracket and the pivot center of the base end of the damper when the seat is closed, but this configuration is not limited to this. When the seat is closed, the pivot center of the tip end of the damper may be located below a straight line connecting the pivot center of the seat bracket and the pivot center of the base end of the damper. With this configuration as well, when the seat is closed, the repulsive force of the damper is prevented from being applied to the seat in the opening direction. In addition, by being attracted to the seat and covers, gaps are less likely to form, improving watertightness.

In addition, in the second modification example, a configuration is described in which the pivot center of the tip end of the damper is located below the straight line connecting the pivot center of the seat bracket and the pivot center of the base end of the damper when the seat is closed, but this configuration is not limited to this. When the seat is closed, the pivot center of the tip end of the damper may be located on a straight line connecting the pivot center of the seat bracket and the pivot center of the base end of the damper. With this configuration as well, when the seat is closed, the repulsive force of the damper is prevented from being applied to the seat in the opening direction.

Furthermore, the seat structure of the present embodiment is not limited to the above-described saddle-type vehicle, but can also be applied to other vehicles such as ATVs (All Terrain Vehicles) and jet skis. A saddle-type vehicle is not limited to all vehicles in which the rider sits astride the seat, but also includes scooter-type vehicles in which the rider does not sit astride the seat.

As described above, a first aspect is a seat structure for a saddle-type vehicle in which a seat (16) is connected to a vehicle body, the seat structure including an accommodation box (41) installed under the seat, a base bracket (first and second base brackets 51 and 52) attached to an upper part of the vehicle body (seat support frame 37), a seat bracket (61) attached to a lower part of the seat, and a repulsive member (damper 71) that applies a repulsive force to the seat in an opening direction, where the seat bracket is pivotably connected to the base bracket, a tip end (72) of the repulsive member is pivotably connected to the seat bracket, and a base end (73) of the repulsive member is pivotably connected to the vehicle body (box support frame 35) rearward of the base bracket and in front of the accommodation box. According to this configuration, when the seat is lifted and the seat bracket pivots relative to the base bracket, the seat is pushed up in the opening direction by the repulsive member via the seat bracket, thereby assisting a lifting operation of the seat. In addition, by installing the repulsive member in a space in front of the accommodation box below the seat, the accommodation box and the repulsive member can be accommodated compactly below the seat. Since the repulsive member is installed near the seat bracket, an overall length of the repulsive member is shortened to reduce its weight, and the repulsive member is less likely to be exposed even when the seat is opened, improving the appearance.

In a second aspect, in the first aspect, the accommodation box is tilted so that a front upper end (43) of the accommodation box is rearward of a front lower end (44), and the base end of the repulsive member is located rearward of the front lower end of the accommodation box and forward of the front upper end of the accommodation box. With this configuration, the accommodation box can be tilted, making it easier to accommodate items in the accommodation box. Even when the accommodation box is moved forward, the damper can be installed in the narrow space in front of the accommodation box.

In a third aspect, in the first or second aspect, the repulsive member is located below the front upper end of the accommodation box and above the front lower end of the accommodation box. According to this configuration, the repulsive member does not protrude above or below the accommodation box, and an installation space for peripheral components is secured above and below the accommodation box while ensuring the thickness of the seat.

In a fourth aspect, in any one of the first to third aspects, the accommodation box is open upward, and the repulsive member is located forward of an opening of the accommodation box. According to this configuration, the repulsive member does not hinder the accommodation of items, improving the convenience of the accommodation box.

In a fifth aspect, in any one of the first to fourth aspects, when the seat is closed, a pivot center (C1, C4, C7) of the tip end of the repulsive member is located on or below a straight line connecting a pivot center (C3, C6, C9) of the seat bracket and a pivot center (C2, C5, C8) of the base end of the repulsive member. According to this configuration, when the seat is closed, the repulsive force of the repulsive member does not act in a direction to open the seat. Therefore, the operation to unlock the seat lock is not made difficult by the repulsive force of the repulsive member. Gaps are unlikely to form at joining portions between the seat and covers, and the like, and watertightness is not impaired.

In a sixth aspect, in any one of the first to fifth aspects, the repulsive member is located inside both ends of the seat bracket in a vehicle width direction. According to this configuration, when the seat is opened, the repulsive force of the repulsive member is applied equally to the left and right sides of the seat via the seat bracket, thereby suppressing left and right tilt of the seat. In addition, the seat is pushed up by the repulsive member without twisting the seat bracket.

In a seventh aspect, in any one of the first to sixth aspects, when the seat is closed, the tip end and base end of the repulsive member are positioned at the same height so that the repulsive member is in a horizontal position. With this configuration, a space for accommodating electronic devices and cables can be secured below the horizontally positioned repulsive member.

In an eighth aspect, in any one of the first to sixth aspects, when the seat is closed, the base end of the repulsive member is positioned lower than the tip end of the repulsive member so that the repulsive member is in a forward-leaning position. With this configuration, a space for accommodating electronic devices and cables can be secured above the repulsive member in the forward-leaning position.

In a ninth aspect, in any one of the first to sixth aspects, when the seat is closed, the base end of the repulsive member is positioned lower than the tip end of the repulsive member so that the repulsive member is in an upright position. With this configuration, a space for accommodating electronic devices and cables can be secured below the upright positioned repulsive member.

Although the present embodiment is described, other embodiments may be made by combining the above-described embodiment and modification examples in whole or in part.

Furthermore, the technology of the present invention is not limited to the above-described embodiments, and may be modified, substituted, or changed in various ways without departing from the spirit and scope of the technical idea. Furthermore, when technological advances or derived technologies allow the technical ideas to be realized in a different way, they may be implemented using that method. Therefore, the claims cover all embodiments that may fall within the scope of the technical concept.

### REFERENCE SIGNS LIST

1: saddle-type vehicle
16, 80, 100: seat
35, 81, 101: box support frame (vehicle body)
37, 82, 102: seat support frame (vehicle body)
41, 83, 103: accommodation box
43, 84, 104: front lower end
44, 85, 105: front upper end
51, 86, 106: first base bracket (base bracket)
52, 87, 107: second base bracket (base bracket)
61, 88, 108: seat bracket
71, 91, 111: damper (repulsive member)
72, 92, 112: tip end of damper
73, 93, 113: base end of damper
78: attachment/detachment track

## Claims

1. A seat structure for a saddle-type vehicle in which a seat (16, 80, 100) is connected to a vehicle body, the seat structure comprising:
an accommodation box (41, 83, 103) installed under the seat;
a base bracket (51, 52, 86, 87, 106, 107) attached to an upper part of the vehicle body;
a seat bracket (61, 88, 108) attached to a lower part of the seat; and
a repulsive member (71, 91, 111) that applies a repulsive force to the seat in an opening direction, wherein
the seat bracket is pivotably connected to the base bracket,
a tip end (72, 92, 112) of the repulsive member is pivotably connected to the seat bracket, and
a base end (73, 93, 113) of the repulsive member is pivotably connected to the vehicle body rearward of the base bracket and in front of the accommodation box.

2. The seat structure according to claim 1, wherein
the accommodation box is tilted so that a front upper end of the accommodation box is located rearward of a front lower end, and
the base end of the repulsive member is located rearward of the front lower end of the accommodation box and forward of the front upper end of the accommodation box.

3. The seat structure according to claim 1 or 2, wherein the repulsive member is located below the front upper end of the accommodation box and above the front lower end of the accommodation box.

4. The seat structure according to claim 1 or 2, wherein
the accommodation box is open upward, and
the repulsive member is located forward of an opening of the accommodation box.

5. The seat structure according to claim 1 or 2, wherein when the seat is closed, a pivot center of the tip end of the repulsive member is located on or below a straight line connecting a pivot center of the seat bracket and a pivot center of the base end of the repulsive member.

6. The seat structure according to claim 1 or 2, wherein the repulsive member is located inside both ends of the seat bracket in a vehicle width direction.

7. The seat structure according to claim 1 or 2, wherein when the seat is closed, the tip end and base end of the repulsive member are positioned at the same height so that the repulsive member is in a horizontal position.

8. The seat structure according to claim 1 or 2, wherein when the seat is closed, the base end of the repulsive member is positioned lower than the tip end of the repulsive member so that the repulsive member is in a forward-leaning position.

9. The seat structure according to claim 1 or 2, wherein when the seat is closed, the base end of the repulsive member is positioned lower than the tip end of the repulsive member so that the repulsive member is in an upright position.
